# EUROPÄISCHE PATENTSCHRIFT

(11) **EP 1 917 385 B1**
(45) Veröffentlichungstag und Bekanntmachung des Hinweises auf die Patenterteilung: **03.03.2010**
(21) Anmeldenummer: 06775906.8
(22) Anmeldetag: 25.08.2006
(51) Int. Cl.: D01F 9/08, D01F 9/10, D01D 5/00

(54) **HERSTELLUNG VON METALL-NANO- UND MESOFASERN**
PRODUCTION OF METAL NANO- AND MESOFIBERS
FABRICATION DE NANO- ET MESOFIBRES METALLIQUES

(30) Priorität: 25.08.2005 DE 102005040422
(43) Veröffentlichungstag der Anmeldung: 07.05.2008
(73) Patentinhaber: PHILIPPS-UNIVERSITÄT MARBURG, D-35032 Marburg (DE)
(72) Erfinder: GREINER, Andreas Prof.Dr., 35287 Amöneburg (DE); WENDORFF, Joachim Prof. Dr., 64569 Nauheim (DE); BOGNITZKI, Michael Dr., 35039 Marburg (DE); GRAESER, Martin Dr., 36093 Künzell (DE)
(74) Vertreter: Buchhold, Jürgen
(86) Internationale Anmeldenummer: PCT/DE2006/001488
(87) Internationale Veröffentlichungsnummer: WO 2007/022770

(56) Entgegenhaltungen:
- WATTHANAARUN ET AL: "Titanium (IV) oxide nanofibers by combined sol-gel and electrospinning techniques: preliminary report on effects of preparation conditions and secondary metal dopant" April 2005 (2005-04), SCIENCE AND TECHNOLOGY OF ADVANCED MATERIALS, ELSEVIER, OXFORD, GB, PAGE(S) 240-245 , XP005039746 ISSN: 1468-6996 das ganze Dokument
- CHANGLU SHAO ET AL: "A novel method for making silica nanofibres by using electrospun fibres of polyvinylalcohol/silica composite as precursor" 1. Oktober 2002 (2002-10-01), NANOTECHNOLOGY, INSTITUTE OF PHYSICS PUBLISHING, BRISTOL, GB, PAGE(S) 635-637 , XP020066988 ISSN: 0957-4484 das ganze Dokument
- HONGQIN DAI ET AL: "A novel method for preparing ultra-fine alumina-borate oxide fibres via an electrospinning technique" 1. Oktober 2002 (2002-10-01), NANOTECHNOLOGY, INSTITUTE OF PHYSICS PUBLISHING, BRISTOL, GB, PAGE(S) 674-677 , XP020066996 ISSN: 0957-4484 das ganze Dokument

## Beschreibung

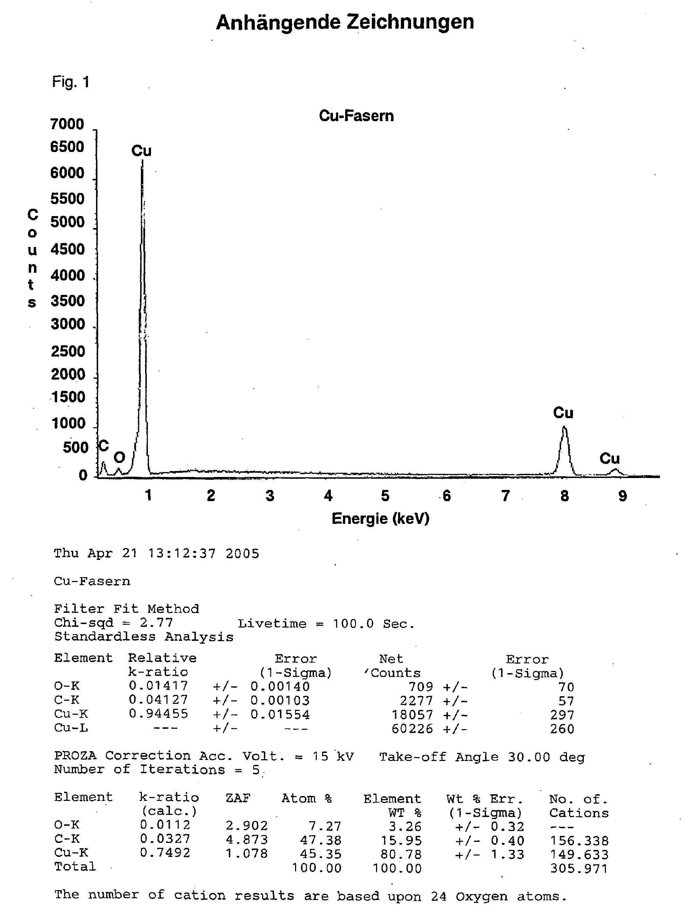

Metalldrähte unterschiedlichster Metalle finden in der Technik derzeit ungezählte Anwendungen. Metalldrähte sind nicht nur auf Grund ihrer hohen mechanischen Festigkeit und elektrische Leitfähigkeit von Interesse sondern auch auf Grund ihrer inhärent hohen thermischen Stabilität, die sie klar gegenüber Kunststoffen heraushebt. Damit werden derartige Metalldrähte auch für besondere Anwendungen, z. B. Hochtemperaturfilter von Interesse. Es ist sehr wohl bekannt, dass die Filtereffizienz mit sinkendem Faserdurchmesser ansteigt. Genau hier sind die Einschränkungen für Metalldrähte, da technisch herstellbare Metalldrähte nur bis zu Durchmesser von mehreren Mikrometern verfügbar sind (z. B. Fa. Baeker, Abb. 1). 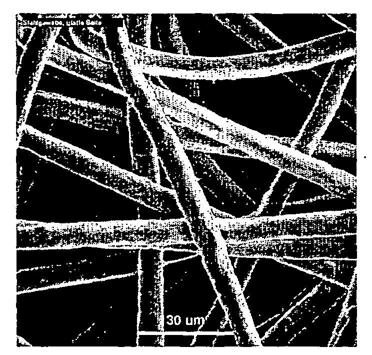 Abb. 1. Rasterelektronenmikroskopische Aufnahme der Metallfasern der Fa. Baeker

Besonders interessant wäre es, mit Hilfe des technisch etablierten Electrospinnings Metallfasern mit Durchmessern im Submikrometerbereich herzustellen. Electrospinning stellt sicherlich eine der derzeit wichtigsten Methoden in Wissenschaft und Technik zur Herstellung polymerer Nanofasern dar. Im Wesentlichen wird beim Electrospinning eine Polymerschmelze oder Polymerlösung an einer als Elektrode dienenden Kante einem hohen elektrischen Feld ausgesetzt. Durch elektrostatische Aufladung der Polymerschmelze oder Polymerlösung wird ein auf die Gegenelektrode gerichteter Materialstrom gebildet, der sich auf dem Wege zur Gegenelektrode verfestigt. Es werden je nach Elektrodengeometrien sogenannte Nonwovens oder Ensambles geordneter Fasern erhalten. Während mit Polymerschmelzen bisher nur Fasern mit Durchmessern deutlich größer als 1000 nm erhalten werden, kann man aus Polymerlösungen Fasern mit Durchmessern von 5 nm herstellen. Technisch besonders interessant, z. B. für Filtrationsanwendungen, sind Fasern mit Durchmessern kleiner 1000 nm. Erste Versuche zum Electrospinning von Metallschmelzen und Mischungen aus Metall / Polymerschmelzen waren erfolglos und scheitern an grundsätzlichen Problemen, die mit dem Aufbau eines geeigneten elektrischen Feldes bei reinen Metallen derzeit unlösbar sind.

Bislang sind Metallfasern mit Durchmessern im Submikrometerbereich nicht bekannt. Eine chinesische Arbeit berichtet über die Herstellung von Kupferoxidfasern, durch Electrospinning von Polymer / Metallsalzlösungen.
1. H. Guan, C. Shao, B. Chen, J. Gong, X, Yang; Inorganic Chemistry 2003, 6, 1409-1411
2. X. Yang, C. Shao, H. Guan, X. Li, J. Gong, Inorganic Chemistry 2004, 7, 176-178
3. C. Shao, X. Yang, H. Guan, Y.Liu, J. Gong, Inorganic Chemistry 2004, 7, 625-627

Bei diesen Verfahren werden Sole aus Polymer und Metallsalz hergestellt, bei denen das Verhältnis Polymer : Metall zwischen 7:1 und 5:1 beträgt, d.h. das Polymer muss in vergleichsweise hohem Überschuss eingesetzt werden. Zudem erfordern diese Verfahren, dass die durch Elektrospinnen gewonnenen Fasern aus Polymer und Metallsalz zunächst für mehrere Stunden im Vakuum getrocknet und anschließend wieder für mehrere Stunden bei hohen Temperaturen calciniert werden. Die Herstellung von Metallfasern ist mit diesen Verfahren nicht möglich.

Die Schrift Watthanaarun et al. ("Titanium (IV) oxide nanofibers by combined solgel and electrospinning techniques: preliminary report on effects of preparation conditions and seoncdary metal dopant" April 2005, Science and Technology of Advanced Materials, Seiten 240-245) beschreibt ein Verfahren zur Herstellung von Titan(IV)oxid-Nanofasern welches von Titaniumisopropoxid/PVP-Mischungen ausgeht. Dabei werden die Schritte Bereitstellen einer Polymer-Metallsalz-Lösung, Elektroverspinnen dieser Lösung und Entfernen des Polymers durchgeführt. Metalldrähte unterschiedlichster Metalle sind jedoch nicht nur auf Grund ihrer hohen mechanischen Festigkeit, sondern auch auf Grund ihrer elektrischen Leitfähigkeit und ihrer inhärent hohen thermischen Stabilität für die Technik von Interesse. Solche Metalldrähte sind mit Hilfe des durch Watthanaarun et al. offenbarten Verfahrens allerdings nur begrenzt und unter wesentlichen Nachteil herstellbar. So zeichnet sich beispielsweise gerade Titan durch eine besonders niedrige elektrische Leitfähigkeit aus.

Ein weiterer Nachteil ist, dass die Herstellung von Titan-Fasern durch Reduktion von Titandioxid-Fasern nur unter Einsatz höchst eingeschränkter Mittel möglich ist. Darüber hinaus ist die die Verwendung von PVP als Polymer nachteilig, da PVP beispielsweise stark zur Bildung von explosionsgefährlichen und toxischen Peroxiden neigt und bei der Herstellung die Verwendung von Stabilisatoren wie beispielsweise TEOS unumgänglich ist.

Die vorliegenden Erfindung stellt dagegen ein Verfahren bereit, dass es gestattet, Polymer und Metall im Verhältnis 3:1 bis 1:1 (w/w) einzusetzen. Ferner erfordert das erfindungsgemäße Verfahren keine Trocknung der durch Elektrospinnen gewonnenen Fasern aus Polymer und Metallsalz, und der Abbau des Polymeranteils dieser Fasern gelingt in kürzerer Zeit sowie mit geringerem Aufwand.

### Aufgabe der Erfindung

Aufgabe der Erfindung ist die Bereitstellung eines verbesserten Verfahrens zur Herstellung von Metalloxidfasern mit Durchmessern im Mikro- und Nanometerbereich mittels Elektrospinnen.
Eine weitere Aufgabe ist die Reduktion der mit dem erfindungsgemäßen Verfahren hergestellten Metalloxidfasern zu Metallfasern.
Die nach dem Verfahren hergestellten Metallfasern sollen zur Anwendung in der Mikroelektronik und für Filteranwendungen geeignet sein.

### Lösung der Aufgabe

Die Aufgabe der Bereitstellung eines verbesserten Verfahrens zur Herstellung von Metalloxidfasern mit Durchmessern im Mikro- und Nanometerbereich durch Elektroverspinnen von Mischungen aus mindestens einem Polymer und mindestens einem Metallsalz in einem Lösungsmittel, wobei der erste Schritt das Herstellen einer Lösung des mindestens einen Polymers und des mindestens einen Metallsalzes in einem Lösunsmittel, wobei das Verhältnis Polymer:Metall zwischen 3:1 und 1:1 (w/W) beträgt und wobei das mindestens eine Polymer und das mindestens eine Metallsalze eine Löslichkeit von mindestens jeweils 1 Gew.-% in dem Lösungsmittel aufweisen, der zweite Schritt das Elektroverspinnen dieser Mischung zu Fasern und der dritte Schritt das Entfernen des Polmers ist wird erfindungsgemäß dadurch gelöst, dass das mindestens eine Metallsalz ein anorganisches oder organisches Salz eines Metalls ausgewählt aus der Gruppe Cu, Ag, Au, Zr, Hf, V, Nb, Ta, Cr, Mo, W, Mn, Re, Fe, Ru, Ni, Pd, Co, Rh, Ir ist, wobei es sich bei dem mindestens einen Metallsalz um ein Chlorid, Sulfat, Nitrat oder Acetat oder um das Salz einer organischen Carbonsäure handelt, ausgewählt aus der Gruppe Formiat, Acetat, Stearat, dass das mindestens eine Polymer ausgewählt ist aus der Gruppe umfassend Polyester, Polyether, Polyolefine, Polyethylenoxide, Polyvinylalkohole, Polyvinylacetale, Polycarbonate, Polyurethane, natürliche Polymere, Polylactide, Polyglycoside, Poly-alpha-,ethylstyrol und/oder Polyacrylnitrile und dass die Fasern einen Durchmesser von 10 nm bis 50 µm und eine Länge von 50 µm bis zu einigen cm aufweisen.

Es wurde überraschenderweise gefunden, dass Metalloxidfasern mit Durchmessern im Mikro- und Nanometerbereich herstellbar sind, indem Mischungen aus mindestens einem Polymer und mindestens einem Metallsalz im Verhältnis Polymer:Metall gleich 3:1 bis 1:1 (w/w) in einem Lösungsmittel zu Fasern elektroversponnen werden und das Polymer anschließend entfernt wird. Für die Herstellung der Mischung wird zunächst das mindestens eine Polymer im Lösungsmittel gelöst. Danach wird das mindestens eine Metallsalz in fester Form zu dieser Lösung gegeben und darin gelöst.

Unter dem Verhältnis von Polymer zu Metall wird dabei das Verhältnis der Masse des mindestens einen Polymers zur Masse des mindestens Metalls im mindestens einen Metallsalz verstanden.

Bei dem mindestens einen Polymer handelt es sich um ein thermisch, chemisch, strahlenchemisch, physikalisch, biologisch, mit Plasma, Ultraschall oder durch Extraktion mit einem Lösungsmittel abbaubares Material. Hierzu zählen beispielsweise, aber nicht erschöpfend, Polyester, Polyether, Polyolefine, Polyethylenoxide, Polyvinylalkohole, Polyvinylacetale, Polycarbonate, Polyurethane, natürliche Polymere, Polylactide, Polyglycoside, Poly-alpha-Methylstyrol und/oder Polyacrylnitrile.

Bei dem mindestens einen Metallsalz handelt es sich um anorganische oder organische Salze von Metallen ausgewählt aus der Gruppe Cu, Ag, Au, Ti, Zr, Hf, V, Nb, Ta, Cr, Mo, W, Mn, Re, Fe, Ru, Ni, Pd, Co, Rh, Ir.
Anorganische Salze im Sinne der vorliegenden Erfindung sind beispielsweise Chloride, Sulfate und Nitrate, sofern diese Kombinationen aus anorganischen Anionen und den jeweiligen Metallkation existent sind.
Unter organischen Salzen werden Salze von Carbonsäuren verstanden, beispielsweise Formiate, Acetate und Stearate, sofern Kombinationen aus organischen Anionen und den jeweiligen Metallkation existent sind.

Erfindungsgemäß wird das Lösungsmittel so gewählt, dass es sowohl das mindestens eine Polymer als auch das mindestens eine Metallsalz in ihm löslich sind. Unter löslich wird dabei verstanden, dass das mindestens eine Polymer und das mindestens eine Metallsalz eine Löslichkeit von mindestens jeweils 1 Gew.-% in dem entsprechenden Lösungsmittel aufweisen.
Dem Fachmann ist bekannt, dass er hierzu die Polaritäten des mindestens einen Polymers, des mindestens einen Metallsalzes und des Lösungsmittels aufeinander abstimmen muss. Er kann dies mit Hilfe seines allgemeinen Fachwissens und ohne den Schutzbereich der Patentansprüche zu verlassen tun.
Geeignete Lösungsmittel sind beispielsweise, aber nicht erschöpfend:
- Wasser,
- aliphatische Alkohole, beispielweise Methanol, Ethanol, n-Propanol, 2-Propanol, n-Butanol, iso-Butanol, tert.-Butanol, Cyclohexanol,
- bei Raumtemperatur flüssige Carbonsäuren, beispielsweise Ameisensäure, Essigsäure, Trifluoressigsäure
- Amine, beispielsweise Diethylamin, Diisopropylamin, Phenylethylamin,
- polar aprotische Lösungsmittel, beispielsweise Aceton, Acetylaceton, Acetonitril, Essigsäureethylester, Diethylenglykol, Formamid, Dimethylformamid (DMF), Dimethylsulfoxid (DMSO), Dimethylacetamid, N-Methylpyrrolidon (NMP), Pyridin, Benzylalkohol,
- halogenierte Kohlenwasserstoffe, beispielsweise Dichlormethan, Chloroform,
- unpolare aliphatische Lösungsmittel, beispielsweise Alkane, ausgewählt aus Hexan, Heptan, Octan und Cycloalkane, ausgewählt aus Cyclopentan, Cyclohexan, Cycloheptan,
- unpolare aromatische Lösungsmittel, beispielsweise Benzol, Toluol.

Die Aufgabe der Reduktion der mit dem erfindungsgemäßen Verfahren hergestellten Metalloxidfasern zu Metallfasern wird erfindungsgemäß gelöst durch Reduktion mit einem Reduktionsmittel.

Dem Fachmann ist bekannt, wie er Metalloxide zu den entsprechenden Metallen reduzieren kann. Geeignete Reduktionsmittel sind beispielsweise Wasserstoff, Kohlenmonoxid, gasförmige Kohlenwasserstoffe, Kohlenstoff, ferner Metalle, die weniger edel sind, d.h. ein negativeres Standardpotential haben als das zu reduzierende Metall, des Weiteren Natriumborhydrid, Lithiumalumiumhydrid, Alkohole und Aldehyde. Alternativ können die Metalloxidfasern elektrochemisch reduziert werden. Der Fachmann kann diese Reduktionsmethoden mit Hilfe seines allgemeinen Fachwissen und ohne den Schutzbereich der Patentansprüche zu verlassen anwenden.

Die erfindungsgemäßen Metall- und Metalloxidfasern weisen Durchmesser von 10 nm bis 5 µm und Längen von 50 µm bis hin zu mehreren mm oder cm auf.

Mit Hilfe der vorliegenden Erfindung ergeben sich vielfältigste Möglichkeiten für die Herstellung unterschiedlicher Metalloxid- und Metallfasern basierend auf dem Electrospinning von Polymer / Metallverbindung / Lösungsmittel und ggf. anschließender Reduktion.
Besonders bemerkenswert bei diesem Ansatz ist die direkte Überführung der metallsalzhaltigen Polymerfasern in Metallfasern, die nicht aus Metallnanopartikeln aufgebaut sind und zudem ohne vorherige Überführung in Metalloxidfasern dargestellt werden.
Nanomaterialien weisen eine Vielzahl von interessanten magnetischen, elektrischen und katalytischen Eigenschaften auf. Sie sind daher viel versprechende neue Materialien für verbindende und funktionelle Bauteile in der Mikroelektronik und Optoelektronik. Auch für Anwendungen in Katalyse und Filtration ergeben sich vielfältige Möglichkeiten.

### Ausführungsbeispiele

### 1. Herstellung von PVB-Kupfer-(II)-Nitrat-Fasern, Cu-(II)-Oxid-Fasern und Fasern aus elementarem Kupfer

Die Basislösung aus 5% PVB+20%Cu(NO₃)₂·3H₂O (PVB : Cu = 1:1) wurde unter folgenden Bedingungen versponnen: E = 25 kV; Abstand zw. Elektroden-20 cm; Nachschub-1,5 ml/Std.

Die entstandene PVB-Cu(NO₃)₂-Fasern wurden dann pyrolisiert (2 Std.; 550°C ; Luftatmosphäre)
Dabei bekommt man CuO-Fasern

Die Cu-Fasern wurden durch Reduktion von CuO-Fasern (2Std.; 300°C; Wasserstoffatmosphäre) hergestellt.
Von alle drei Fasern wurden SEM - Bilder aufgenommen (jeweils 6 Bilder mit 10.000 Vergrößerung). Mit diesen Bildern wurde der Durchmesser der Fasern vermessen (50 Vermessungen von jedem Material).

Die Messergebnisse sind in Tabelle 1 zusammengefasst.

**Tabelle 1**

| Material | Faserdurchmesser (Mittelwert aus 50 Vermessungen) (µm) | Standardabweichung (µm) | Durchmesser der dünnsten Faser (µm) | Durchmesser der dicksten Faser (µm) |
|---|---|---|---|---|
| PVB-Cu(NO₃)₂-Fasern | 0.554 | 0.269 | 0.173 | 1.786 |
| CuO-Fasern | 0.483 | 0.143 | 0.212 | 0.761 |
| Cu-Fasern | 0.274 | 0.158 | 0.081 | 0.672 |

Fig. 1 zeigt eine energiedispersive Röntgenanalyse der Cu-Fasern.

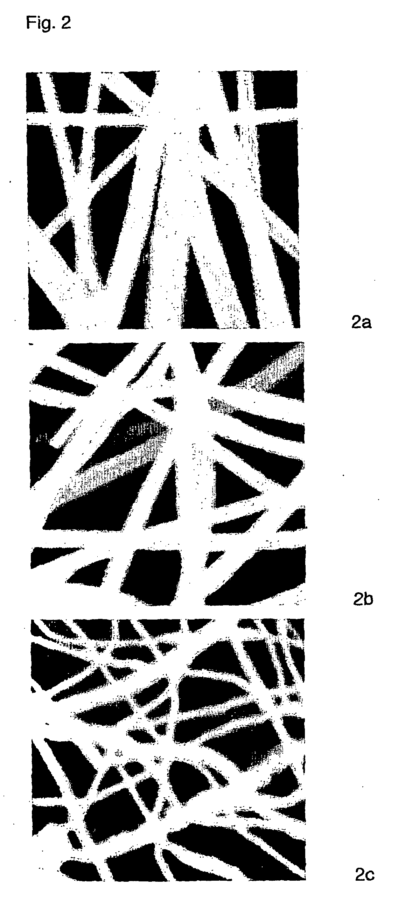

Fig. 2 zeigt PVB-Cu(NO₃)₂-Fasern, CuO-Fasern und Cu-Fasern.

### 2. Herstellung von PVB-Cobalt-(II)-Nitrat-Fasern, Co-(II)-Oxid-Fasern und Fasern aus elementarem Cobalt

Die Basislösung aus 5% PVB+25% Co(NO₃)₂·6H₂O (PVB : Co = 1:1) wurde unter folgenden Bedingungen versponnen: E = 25 kV; Abstand zw. Elektroden-20 cm; Nachschub-1,5 ml/Std.

Die entstandene PVB-Co(NO₃)₂-Fasern wurden dann pyrolisiert (2 Std.; 550°C ; Luftatmosphäre)
Dabei bekommt man CoO-Fasern

Die Co-Fasern wurden durch Reduktion von CoO-Fasern (2Std.; 500°C; Wasserstoffatmosphäre) hergestellt.

Von alle drei Fasern wurden SEM - Bilder aufgenommen (jeweils 6 Bilder mit 10.000 Vergrößerung). Mit diesen Bildern wurde der Durchmesser der Fasern vermessen (50 Vermessungen von jedem Material)
Die Messergebnisse sind in der Tabelle 2 zusammengefasst.

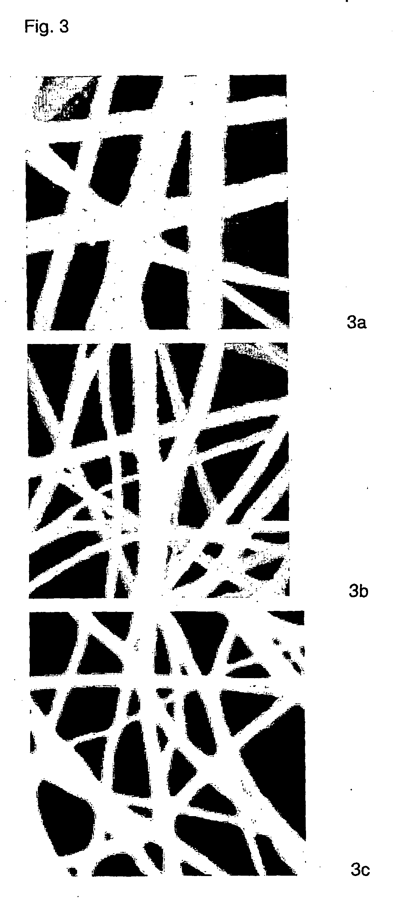

Die Fasern sind in Fig. 3 gezeigt.

**Tabelle 2**

| Material | Faserdurchmesser (Mittelwert aus 50 Vermessungen) (µm) | Standardabweichung (µm) | Durchmesser der dünnsten Faser (µm) | Durchmesser der dicksten Faser (µm) |
|---|---|---|---|---|
| PVB-Co(NO₃)₂-Fasern | 0,725 | 0,232 | 0,293 | 1,294 |
| CoO-Fasern | 0,339 | 0,119 | 0,108 | 0,655 |
| Co-Fasern | 0,329 | 0,103 | 0,120 | 0,568 |

### 3. Herstellung von PVB-Nickel-(II)-Nitrat-Fasern, Ni-(II)-Oxid-Fasern und Fasern aus elementarem Nickel

Die Basislösung aus 5% PVB+25% Ni(NO₃₎₂·6H₂O (PVB : Ni = 1:1) wurde unter folgenden Bedingungen versponnen: E = 25 kV; Abstand zw. Elektroden-20 cm; Nachschub-1,5 ml/Std.

Die entstandene PVB-Ni(NO₃)₂-Fasern wurden dann pyrolisiert (2 Std.; 550°C ; Luftatmosphäre)
Dabei bekommt man NiO-Fasern

Die Ni-Fasern wurden durch Reduktion von NiO-Fasern (2Std.; 550°C; Wasserstoffatmosphäre) hergestellt.

Von alle drei Fasern wurden SEM - Bilder aufgenommen (jeweils 6 Bilder mit 10.000 Vergrößerung). Mit diesen Bildern wurde der Durchmesser der Fasern vermessen (50 Vermessungen von jedem Material)

Die Messergebnisse sind in der Tabelle 3 zusammengefasst.

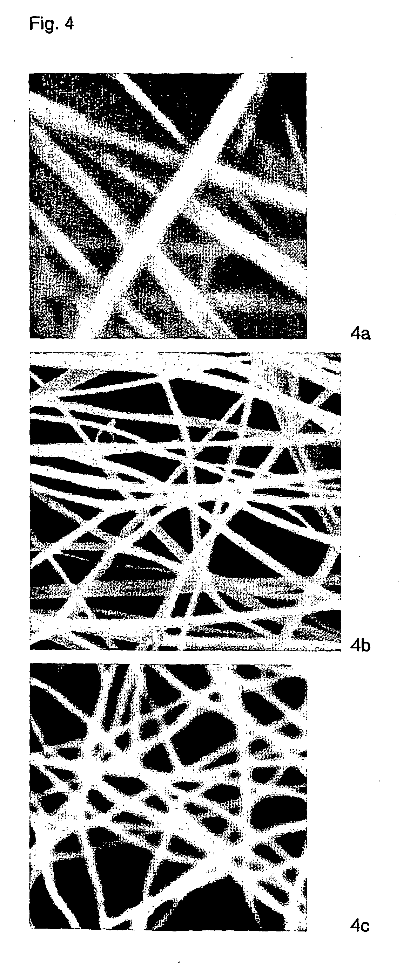

Die Fasern sind in Fig. 4 gezeigt.

**Tabelle 2**

| Material | Faserdurchmesser (Mittelwert aus 50 Vermessungen) (µm) | Standardabweichung (µm) | Durchmesser der dünnsten Faser (µm) | Durchmesser der dicksten Faser (µm) |
|---|---|---|---|---|
| PVB-Ni(NO₃)₂-Fasern | 0,477 | 0,190 | 0,135 | 0,943 |
| NiO-Fasern | 0,228 | 0,096 | 0,078 | 0,554 |
| Ni-Fasern | 0,238 | 0,082 | 0,138 | 0,552 |

### Figurenlegende

Fig. 1:
Energiedispersive Röntgenanalyse der hergestellten Kupferfasern
Fig. 2
Polymer-Cu(NO₃)₂ Fasern, CuO-Fasern und Cu-Fasern,

| | |
|---|---|
| 3a: | PVB-Cu(NO₃)₂-Fasern |
| 3b: | CuO-Fasern |
| 3c: | Cu-Fasern |

Fig. 3
Polymer-Co(NO₃)₂ Fasern, CoO-Fasern und Co-Fasern,

| | |
|---|---|
| 3a: | PVB-Co(NO₃)₂-Fasern |
| 3b: | CoO-Fasern |
| 3c: | Co-Fasern |

Fig. 4
Polymer-Ni(NO₃)₂ Fasern, NiO-Fasern und Ni-Fasern,

| | |
|---|---|
| 3a: | PVB-Ni(NO₃)₂-Fasern |
| 3b: | NiO-Fasern |
| 3c: | Ni-Fasern |

## Patentansprüche

1. Verfahren zur Herstellung von Metalloxidfasern mit Durchmessern im Mikro- oder Nanometerbereich durch Elektroverspinnen von Mischungen aus mindestens einem Polymer und mindestens einem Metallsalz in einem Lösungsmittel, wobei der erste Schritt das
- Herstellen einer Lösung des mindestens einen Polymers und des mindestens einen Metallsalzes in einem Lösungsmittel, wobei das Verhältnis Polymer:Metall zwischen 3:1 und 1:1 (w/w) beträgt und wobei das mindestens eine Polymer und das mindestens eine Metallsalz eine Löslichkeit von mindestens jeweils 1 Gew.-% in dem Lösungsmittel aufweisen, der zweite Schritt das
- Elektroverspinnen dieser Mischung zu Fasern und der dritte Schritt das,
- Entfernen des Polymers ist,
**dadurch gekennzeichnet,**
- **dass** das mindestens eine Metallsalz ein anorganisches oder organisches Salz eines Metalls ausgewählt aus der Gruppe Cu, Ag, Au, Zr, Hf, V, Nb, Ta, Cr, Mo, W, Mn, Re, Fe, Ru, Ni, Pd, Co, Rh, Ir ist,
- wobei es sich bei dem mindestens einen Metallsalz um ein Chlorid, Sulfat, Nitrat oder Acetat oder um das Salz einer organischen Carbonsäure handelt, ausgewählt aus der Gruppe Formiat. Acetat, Stearat,
- **dass** das mindestens eine Polymer ausgewählt ist aus der Gruppe umfassend Polyester, Polyether, Polyolefine, Polyethylenoxide, Polyvinylalkohole, Polyvinylacetale, Polycarbonate, Polyurethane, natürliche Polymere, Polylactide, Polyglycoside, Poly-alpha-Methylstyrol und/oder Polyacrylnitrile und
- **dass** die Fasern einen Durchmesser von 10 nm bis 50 µm und eine Länge von 50 µm bis zu einigen cm aufweisen

2. Verfahren gemäß Anspruch 1, **dadurch gekennzeichnet, dass** das mindestens eine Polymer aus einem abbaubaren Material besteht.

3. Verfahren gemäß einem der Ansprüche 1 bis 2, **dadurch gekennzeichnet, dass** das Lösungsmittel ausgewählt ist aus der Gruppe Wasser, Methanol, Ethanol, n-Propanol, 2-Propanol, n-Butanol, iso-Butanol, tert.-Butanol, Cyclohexanol, Ameisensäure, Essigsäure, Trifluoressigsäure, Diethylamin, Diisopropylamin, Phenylethylamin, Aceton, Acetylaceton, Acetonitril, Essigsäureethylester, Diethylenglykol, Formamid, Dimethylformamid (DMF). Dimethylsulfoxid (DMSO), Dimethylacetamid, N-Methylpyrrolidon (NMP), Pyridin, Benzylalkohol, Dichlormethan, Chloroform, Hexan, Heptan, Octan, Cyclopentan, Cyclohexan, Cycloheptan, Benzol, Toluol.

4. Verfahren gemäß einem der Ansprüche 1 bis 3, **dadurch gekennzeichnet, dass** das Lösungsmittel ausgewählt ist aus der Gruppe Wasser, Methanol, Ethanol, Isopropanol.

5. Verfahren gemäß einem der Ansprüche 1 bis 4, **dadurch gekennzeichnet, dass** das Entfernen des mindestens einen Polymers thermisch, chemisch, strahlenchemisch, physikalisch, biologisch, mit Plasma, Ultraschall oder durch Extraktion mit einem Lösungsmittel erfolgt.

6. Verfahren gemäß einem der Ansprüche 1 bis 5, **dadurch gekennzeichnet, dass** im Anschluss an das Entfernen des Polymers eine Reduktion der Metalloxidfasern zu den korrespondierenden Metallfasern erfolgt.

7. Verfahren gemäß Anspruch 6, **dadurch gekennzeichnet, dass** die Reduktion der Metalloxidfasern zu den korrespondierenden Metallfasern mit hilfe eines Reduktionsmittels ausgewählt aus der Gruppe Wasserstoff. Kohlenmonoxid, gasförmige Kohlenwasserstoffe, Kohlenstoff, ein Metall mit einem niedrigeren Standardpotential als das zu reduzierende Metall, Natriumborhydrid, Lithiumaluminiumhydrid, Alkohole, Aldehyde erfolgt.

8. Metalloxidfasern, erhältlich durch ein Verfahren gemäß einem der Ansprüche 1 bis 7

9. Metallfasern, erhältlich durch ein Verfahren gemäß einem der Ansprüche 6 und 7.

10. Metall- oder Metalloxidfasern gemäß einem der Ansprüche 8 und 9, **dadurch gekennzeichnet, dass** die Fasern einen Durchmesser von 10 nm bis 50 µm und eine Länge von 50 µm bis zu einigen cm aufweisen.

11. Verwendung von Metall- oder Metalloxidfasern gemäß einem der Ansprüche 1 bis 10 zur Herstellung von verbindenden oder funktionellen Bauteilen in der Mikroelektronik.

12. Verwendung von Metall- oder Metalloxidfasern gemäß einem der Ansprüche 1 bis 11 für Katalyse oder Filtration.

## Claims

1. Method for the production of metal oxide fibres with diameters in the range of micro- or nanometres through the electrospinning of mixtures of at least one polymer and at least one metal salt in a solvent, wherein the first step is
- the production of a solution of the at least one polymer and the at least one metal salt in a solvent, wherein the ratio of polymer metal ranges between 3:1 and 1:1 (w/w) and wherein the at least one polymer and the at least one metal salt comprise a solubility of at least 1 wt.-% in the solvent, respectively, and the second step is
- the electrospinning of this mixture into fibres, and the third step is
- the removal of the polymer,
**wherein**
- the at least one metal salt is an inorganic or organic salt of a metal selected from the group Cu, Ag, Au, Zr, Hf, V, Nb, Ta, Cr, Mo, W, Mn, Re, Fe, Ru, Ni, Pd, Co, Rh, Ir.
- wherein the at least one metal salt is a chloride, sulphate, nitrate or acetate or the salt of an organic carboxylic acid, selected from the group Formiate, acetate, stearate.
- the at least one polymer is selected from the group comprising polyester, polyether, polyolefins, polyethylene oxides, polyvinyl alcohols, polyvinyl acetals, polycarbonates, polyurethanes, natural polymers, polylactides, polyglycosides, poly-alpha-methylstyrene and / or polyacrylonitriles and
- the fibres comprise a diameter from 10 nm to 50 µm and a length of 50 µm up to several cm.

2. Method according to claim 1, wherein the at least one polymer is a degradable material.

3. Method according to one of the claims 1 to 5, wherein the solvent is selected from the group water, methanol, ethanol, n-propanol, 2-propanol, n-butanol, isobutanol, tert.-butanol, cyclohexanol, formic acid, acetic acid, trifluoroacetic acid, diethylamine, di-isopropylamine, phenylethylamine, acetone, acetylacetone, acetonitrile, acetic acid ethyl ester, diethyleneglycol, formamide, dimethylformamide (DMF), dimethylsulfoxide (DMSO), dimethylacetamide, N-methylpyrrolidone (NMP), pyridine, benzylalcohol, dichloromethane, chloroform, hexane, heptane, octane, cyclopentane, cyclohexane, cycloheptane, benzene, toluene,

4. Method according to one of the claims 1 to 3, wherein the solvent is selected from the group water, methanol, ethanol, isopropanol.

5. Method according to one of claims 1 to 4, wherein the removal of the at least one polymer is carried out thermally, chemically, radiation-chemically, physically, biologically, using plasma, ultrasound or extraction with a solvent.

6. Method according to one of claims 1 to 5, wherein after removal of the polymer, a reduction of the metal oxide fibres to the corresponding metal fibres occurs.

7. Method according to claim 6, wherein the reduction of the metal oxide fibres to the corresponding metal fibres occurs with the help of a means of reduction selected from the group hydrogen, carbon monoxide, gaseous hydrocarbons, carbon, a metal with lower standard potential than the metal to be reduced, sodium borohydride, lithium aluminium hydride, alcohols, aldehydes.

8. Metal oxide fibres which are obtainable by a method according to one of the claims 1 to 7.

9. Metal fibres which are obtainable by a method according to one of the claims 6 and 7.

10. Metal fibres or metal oxide fibres according to one of the claims 8 and 9,
wherein the fibres comprise a diameter from 10 nm to 50 µm and a length of 50 µm up to several cm.

11. Use of metal fibres or metal oxide fibres according to one of the claims 1 to 10 for the production of joining or functional components in microelectronics.

12. Use of metal fibres or metal oxide fibres according to one of the claims 1 to 13 for catalysis or filtration.

## Revendications

1. Procédé de production des fibres d'oxyde métallique avec un diamètre de l'ordre des micro- ou nanomètres par électrofilage des mélanges d'au moins un polymère et d'au moins un sel métallique dans un solvant ou la première étape est
- la production d'un solvant d'au moins un polymère et d'au moins un sel métallique dans un solvant, où le rapport polymère : métal est d'entre 3:1 et 1:1 (w/w) et ou l'au moins un polymère et l'au moins un sel métallique présentent respectivement une solubilité d'un % en poids dans le solvant, et la deuxième étape est
- l'électrofilage de ce mélange en fibres et la troisième étape est
- l'élimination du polymère,
**caractérisé en ce**
- **que** l'au moins un sel métallique est un sel anorganique ou organique d'un métal faisant partie du groupe comprenant Cu, Ag, Au, Zr, Hf, V, Nb, Ta, Cr, Mo, W, Mn, Re, Fe, Ru, Ni, Pd, Co, Rh, Ir,
- où l'au moins un sel métallique est un chlorure, sulfate, nitrate ou acétate ou le sel d'un acide carboxylique organique, faisant partie du groupe comprenant formiate, acétate, stéarate,
- **que** l'au moins un polymère fait partie du groupe comprenant polyester, polyéther, polyoléfines, oxydes de polyéthylène, alcools polyvinyliques, acétals polyvinyliques, polycarbonates, polyuréthanes, polymères naturels, polylactides, polyglycosides, poly(alpha-méthylstyrène) et/ou polyacrylonitriles et
- **que** les fibres présentent un diamètre de 10 nm jusqu'à 50 µm et une longueur de 50 µm jusqu'à plusieurs centimètres.

2. Procédé selon la revendication 1, **caractérisé en ce que** l'au moins un polymère est composé d'un matériau dégradable.

3. Procédé, selon l'une des revendications 1 à 5, **caractérise en ce que** le solvant fait partie du groupe comprenant eau, méthanol, éthanol, n-propanol, 2-propanol, n-butanol, isobutanol, butanol tertiaire, cyclohexanol, acide formique, acide acétique, acide trifluoracétique, diéthylamine, diisopropylamine, phenyléthylamine, acétone, acétylacétone, acétonitrile, acétate d'éthyle, diéthylèneglycol, formamide, diméthylformamide (DMF), diméthylsulfoxyde (DMSO), diméthylacétamide, N-méthylpyrrolidone (NMP), pyridine, alcool benzylique, dichlorométhane, chloroforme, hexane, heptane, octane, cyclopentane, cyclohexane, cycloheptane, benzène, toluène.

4. Procédé selon l'une des revendications 1 à 3, **caractérisé en ce que** le solvant fait partie du groupe comprenant eau, méthanol, éthanol, isopropanol.

5. Procédé selon l'une des revendications 1 à 4, **caractérisé en ce que** l'élimination d'au moins un polymère se fait suivant un procédé thermique, chimique, radiochimique, physique, biologique, par plasma, ultrason ou extraction avec un solvant.

6. Procédé selon l'une des revendications 1 à 5, **caractérisé en ce que** suite à l'élimination du polymère, il se fait une réduction des fibres d'oxyde de métal aux fibres de métal correspondantes.

7. Procécé selon la revendication 6, **caractérisé en ce que** la réduction des fibres d'oxyde de métal aux fibres de métal correspondantes se fait avec l'aide d'un moyen de réduction faisant partie du groupe hydrogène, monoxyde de carbone, hydrocarbures gazeuses, carbone, un métal avec un potentiel standard plus bas que le métal à réduire, borohydrure de sodium, hydrure d'aluminium et de lithium, alcools, aldéhydes.

8. Des fibres d'oxyde de métal susceptibles d'être obtenus par un procédé selon l'une des revendications 1 à 7.

9. Des fibres de métal susceptibles d'être obtenus par un procédé selon l'une des revendications 6 et 7.

10. Des fibres de métal ou d'oxyde de métal selon l'une des revendications 8 et 9, **caractérisés en ce que** les fibres présentent un diamètre de 10 nm jusqu'à 50 µm et une longueur de 50 µm jusqu'à plusieurs centimètres.

11. Utilisation des fibres de métal au d'oxyde de métal selon l'une des revendications 1 à 10 pour la production des composants de connexion ou fonctionnels dans la microélectronique.

12. Utilisation des fibres de métal ou d'oxyde de métal selon l'une des revendications 1 à 13 pour catalyse ou filtration.
